# EUROPEAN PATENT APPLICATION

(11) **EP 4 793 254 A1**
(43) Date of publication of application: **19.08.2026**
(21) Application number: 25158612.9
(22) Date of filing: 18.02.2025
(51) Int. Cl.: C04B 28/04, C04B 40/00, C04B 111/00

(54) **METHOD OF PLACING A FLOWABLE CONSTRUCTION MATERIAL**

(71) Applicant: Holcim Technology Ltd, 6300 Zug (CH)
(72) Inventor: DUCHAND, Sylvain, 38070 Saint Quentin Fallavier (FR); MYLENE, Martin, 38070 Saint Quentin Fallavier (FR)
(74) Representative: SONN Patentanwälte GmbH & Co KG

(57) **Abstract**

A method for 3D printing of construction materials wherein a flowable composition containing hydraulic cement with low tricalcium aluminate (C3A) content (<5 wt.-%, preferably <3 wt.-%) and aggregates is conveyed to a deposition head and deposited layer-by-layer through an outlet of the moving deposition head. Prior to deposition, a yielding agent comprising aluminum chloride, its hydroxides, or mixtures thereof is added to increase the yield stress of the material compared to its state during conveyance, enabling successive layers to be placed on top of each other without deformation

## Description

The invention refers to a method of placing a flowable construction material comprising a hydraulic cement and aggregates for building structural and architectural components layer-by-layer, such as for 3D concrete or mortar printing.

3D printing is a building technique that is commonly called "additive manufacturing" and consists of joining material to produce objects, layer upon layer, from 3D model data or other electronic data source. In particular, successive layers of material are formed under computer control by means of an industrial robot. It has already been proposed to develop 3D printers capable of producing structural buildings and infrastructure elements from a construction material that can be a mortar or a concrete. According to these proposals, the construction material is extruded through a nozzle to build structural components layer-by-layer without the use of formwork or any subsequent vibration. The possibility to build structures without formwork is a major advantage in terms of production rate, architectural freedom, material savings, and cost reduction.

Usually, 3D printing of construction materials is a continuous process that comprises conveying fresh concrete, mortar or micro-mortar to a deposition head and placing the construction material through an outlet of the deposition head in order to form a layer of concrete. While placing the concrete, the mortar or the micro-mortar, the deposition head is moved under computer control in order to create a layer of construction material in accordance with the underlying 3D model. In particular, the deposition head places a ribbon of fresh concrete or mortar material. For allowing the fresh concrete or mortar to be moved smoothly through each part of the delivery process to the deposition head, a consistent rheology of the fresh material must be safeguarded.

A critical requirement in 3D printing of construction materials is the ability to control the rheological properties of the material during different stages of the printing process. During conveyance and extrusion, the material must be sufficiently flowable to pass through the printing system. However, immediately after placement, the material must develop sufficient yield stress to maintain its shape and support subsequent layers without deformation or collapse.

3d printed elements also require a strong bonding strength between the deposited layers, to ensure an adequate overall strength of the 3d printed structure. For this purpose, it is beneficial to place a layer while the preceding layer is still fresh. However, with a hydraulic binder having a short initial setting time the operational flexibility is very limited.

To accommodate some of the above requirements, it has been proposed to add a thickening agent and/or an accelerator to the flowable construction so as to increase the yield stress of the freshly placed material or reduce its setting times. However, a binder having a short initial setting time will increase the risk that material builds up in the mixing devices, pumps, and in the printing head.

In conventional cement compositions, the development of yield stress is typically achieved through the formation of ettringite in the early stages of cement hydration. This process requires the presence of sufficient tricalcium aluminate (C3A) in the cement. However, certain applications require the use of cements with low C3A content, such as white cements and sulfate-resistant cements, which typically contain less than 5 wt.-% C3A.

The prior art has attempted to address the slow structuration of low C3A cements by adding aluminum sulfate as a yielding agent. However, the use of aluminum sulfate in these systems presents several drawbacks. First, large quantities of aluminum sulfate are required to achieve sufficient structuration, which leads to excessively high initial flow thresholds. This results in increased pressure requirements in the printing system, limited mortar flow, and restricted flow rates, ultimately leading to reduced printing speeds. Second, the high concentrations of aluminum sulfate impair adhesion between successive print layers, compromising the structural integrity of the printed component. Additionally, the use of large amounts of aluminum sulfate increases water demand, which is disadvantageous for the printing process.

It is therefore an object of the present invention to provide an improved method for 3D printing of construction materials using cements with low C3A content. More specifically, it is an object of the invention to provide a method that achieves controlled development of yield stress in printed construction materials containing low C3A cement while avoiding the drawbacks associated with conventional yielding agents.

According to the invention, these and other objects are achieved by a method of placing a flowable construction material comprising a hydraulic cement and aggregates for building structural and architectural components layer-by-layer, such as for 3D concrete or mortar printing, said method comprising:
conveying the flowable construction material to a deposition head, placing the construction material through an outlet of the deposition head while moving the deposition head, in order to form a layer of construction material,
before placing the construction material, adding a yielding agent to the construction material so that the placed material has an increased yield stress when compared to the material during the conveying step,
wherein successive layers of construction material are placed on top of each other,
wherein the hydraulic cement has a content of tricalcium aluminate (C3A) of < 5 wt.-%, preferably < 3 wt.-%,
wherein aluminum chloride, a hydroxide thereof or a mixture of the foregoing is used as said yielding agent.

It was surprisingly found that using aluminum chloride or hydroxides thereof as yielding agents in low C3A cement systems leads to more efficient structuring behavior compared to conventional aluminum sulfate-based yielding agents. This improved efficiency means that the desired yield stress development can be achieved with lower addition rates of the yielding agent. The ability to use lower addition rates provides multiple cascading benefits for the printing process.

An advantageous effect of the lower addition rates is that the initial flow threshold remains at a manageable level. This allows the construction material to be extruded at lower pressures compared to systems using conventional aluminum sulfate yielding agents. The reduced pressure requirements directly enable higher flow rates during printing, which in turn allows for increased printing speeds without compromising the quality of the printed structure.

Another technical effect of the invention is improved interlayer adhesion between successive printed layers. When using conventional aluminum sulfate yielding agents in high concentrations, the rapid and excessive structuring often leads to poor bonding between layers. In contrast, the method according to the invention achieves the necessary structuring for shape stability while maintaining sufficient plasticity at the layer interfaces to ensure good interlayer adhesion.

The method according to the invention also provides benefits in terms of water demand. The use of aluminum chloride or hydroxides thereof as yielding agents requires less water compared to equivalent systems using aluminum sulfate. This reduced water demand is particularly advantageous in 3D printing applications, as excess water can lead to deformation of printed layers and extended setting times.

The advantages of the invention are specific to cement systems having a C3A content below 5 wt.-%, where conventional yielding agents typically require excessive dosages to achieve adequate structuring. It was further found that the technical effects of the invention are maintained across a range of processing times, typically between 10 and 30 minutes, providing a practical working window for industrial applications.

As used herein, the flow threshold, also called yield stress, is the minimum stress needed to make the construction material begin to flow. The yield stress can be measured using a shear vane tester (e.g. a Hand Vane tester, Pilcon, equipped with a 33 mm diameter vane). The vane is inserted perpendicularly into the construction material until completely submerged, taking care not to touch the bottom of the container. Prior to each measurement, the vane cursor is reset to zero. The measurement is performed by rotating the dial at a constant, very slow speed without interruption until the cursor ceases to progress. The yield stress value is read directly from the scale of the device in kilopascals (kPa) .

According to a preferred embodiment of the invention, the yielding agent is added to the construction material in the deposition head. In this embodiment, the flowable construction material and the yielding agent are conveyed separately to the deposition head, where they are combined immediately before placement. This arrangement prevents premature structuring of the material during conveyance, ensuring optimal flow properties in the delivery system. Further, it enables precise control over the timing of the structuring reaction, as the yielding agent is introduced only moments before the material is deposited. It allows for adjustment of the yielding agent dosage during the printing process to accommodate different printing conditions or geometric requirements. The mixing of the yielding agent with the construction material may be achieved through various means within the deposition head, such as static mixers or mechanical mixing elements designed to ensure rapid and uniform distribution of the yielding agent throughout the construction material.

According to a preferred embodiment of the invention, the yielding agent is present in an amount of 0.5-3.5 % by weight, preferably 1.0-3.0 % by weight, based on the hydraulic cement. The use of the yielding agent in an amount of 0.5-3.5% by weight has been found to provide an optimal balance of technical effects. At concentrations below 0.5 % by weight, the structuring effect is typically insufficient to prevent deformation of the printed layers. At concentrations above 3.5% by weight, the initial flow threshold becomes too high, leading to excessive pressure requirements in the printing system and potential problems with layer adhesion. Within the claimed range, particularly between 1.0 and 3.0 % by weight, the yielding agent provides sufficient structuring for shape stability of the printed layers while maintaining good flowability during the conveying step.

According to a preferred embodiment of the invention, the yield stress of the freshly placed construction material is 200-6000, preferably 500-2000 Pa, preferably 400-1000 Pa, measured 30 sec. after its placement. Therefore, it is preferably proceeded such that the amount of yielding agent added to the construction material is selected so as to increase the yield stress to 200-6000 Pa, preferably 500-2000 Pa, measured 30 sec. after its placement.

Preferably, the amount of yielding agent added to the construction material is selected so as to increase the yield stress to 2000-8000 Pa, preferably 2000-6000 Pa, measured 300 sec. after its placement.

Preferably, the amount of yielding agent added to the construction material is selected so as to increase the yield stress by 5-10 kPa during the first 20 minutes after its placement.

Preferably, the yielding agent is selected from the group consisting of aluminum chloride, aluminum hydroxychloride, aluminum polyhydroxychlorosulfate, and mixtures thereof. These compounds, which are known as coagulants in water treatment applications, have been found to interact effectively with cement particles to efficiently develop yield stress after placement. Aluminum hydroxychloride and aluminum polyhydroxychlorosulfate are particularly advantageous due to their partially hydrolyzed state, which enables rapid interaction with the cement system without requiring excessive amounts of mixing water.

Preferably, the construction material does not contain any setting accelerator other than aluminum chloride and hydroxides thereof.

The invention allows to minimize or even eliminate the use of a thickening agent. In a preferred embodiment, the construction material does not contain any thickening agent. As used herein, a thickening agent is understood to refer to a viscosity modifying admixture as defined in European Standard EN-934-2 of August 2012, which is an admixture that limits segregation in fresh concrete or mortar before setting occurs, i.e. the separation of the concrete constituents as a function of their respective densities and weight, by improving cohesion. Examples of thickening agents include starch ether, celluloses ether, water soluble polyacrylamide, casein, a suspension of colloidal silica, or a liquid alkali swellable emulsions of polymers (ASE, HASE), and/or welan gum.

The construction material may be a cement mortar or a cement micro-mortar, i.e. a mixture of a hydraulic cement, potentially additional mineral components such as ground limestone, water, sand, and chemical admixtures.

The construction material may also be a concrete, i.e. a mixture of a hydraulic cement, potentially additional mineral components such as ground limestone, water, sand, gravel, and chemical admixtures.

The flowable construction material contains a hydraulic cement, which is a hydraulic binder comprising at least 50 wt.-% of CaO and SiO₂ that sets due to a chemical hydration reaction between the dry ingredients and water. The hydraulic cement may contain other components in addition to CaO and SiO₂. Various mineral additions, such as, e.g., silica fume, granulated blast-furnace slag (gbfs), fly ash, natural pozzolans, calcined clays, ground limestone or concrete demolition waste, may be added to Portland cement, in order to obtain Portland composite cements. The mineral additions, typically between 10 and 50 wt.-% of the total weight of the hydraulic cement, are in most applications ground granulated blast furnace slag, fly ash, pozzolans, ground limestone or mixtures thereof. The addition of silica fume can be of particular benefit for the production of high strength 3d printed mortar or concrete, i.e. having a compressive strength at 28 days of at least 70 Mpa.

Preferably, the hydraulic cement consists of Portland cement, which is Portland clinker ground and mixed with a source of calcium sulfate, and up to 5 wt.-% of minor additional constituents as defined in the cement standard EN 197-1 of April 2012.

Preferably, the hydraulic cement is composed of Portland clinker mixed with any one or several of the main and minor constituents described in the cement standard EN 197-1 of April 2012, and calcium sulfate. The hydraulic cement may also comprise fine ground particles of concrete demolition waste, or ground slags that are not produced by blast furnaces.

According to a preferred embodiment of the invention, the hydraulic cement comprises Portland clinker in an amount of > 65 % by weight, preferably in an amount of > 80 % by weight, more preferably in an amount of > 90 % by weight, based on the total amount of the hydraulic cement.

Preferably, the hydraulic cement comprises at least 10 wt.-% of a supplementary cementitious material such as pozzolanic materials, more preferably natural pozzolans or natural calcined pozzolan as described in the cement standard EN 197-1 of April 2012.

Suitable cements are the cements described in the European NF EN 197-1 Standard of April 2012 or mixtures thereof, preferably cement of the types CEM I, CEM II, CEM III, CEM IV or CEM V.

The hydraulic cement may also be a fine or an ultrafine cement, i.e. a hydraulic cement that is ground to a higher fineness than standard hydraulic cements. The fineness can for example be higher that 5000 cm2 /g and reach values up to 13000 cm2 /g or even 15000 cm2 /g (expressed as cement Blaine fineness).

According to a preferred embodiment, the flowable construction material does not contain any aluminate cement, such as calcium aluminate cement. Alternatively, aluminate cement such as calcium aluminate cement or a calcium sulfoaluminate cement, may be present in an amount of < 4.0 % by weight, preferably < 2.0 % by weight, based on the total amount of hydraulic cement.

Further, the flowable construction material may contain a mineral filler, such as limestone. The addition of a fine fraction of a mineral filler can be of particular benefit for the production of high strength 3d printed mortar or concrete. Preferably, the mineral filler, such as limestone, has a particle size of < 50 pm, preferably < 40 pm. More preferably, the mineral filler, such as limestone, comprises a fine fraction having a particle size distribution characterized by a D50 of 3-5 pm and a D90 of 8-12 pm and a coarse fraction having a particle size distribution characterized by a D50 of 10-12 pm and a D90 of 35-40 pm.

Preferably, the flowable construction material further comprises limestone, wherein the weight ratio of Portland cement to limestone is 10:1-2:1, preferably 5:1-3:1.

Preferably, the flowable construction material comprises 600-900 kg Portland cement, 200-500 kg limestone, 900-1300 kg sand and 150-300 kg water, per m³ of the flowable construction material.

The flowable construction material may contain metal fibers and/or organic fibers and/or glass fibers. The quantity by volume of fibers is generally from 0.5 to 8% relative to the total volume of the fresh concrete composition. The quantity of metal fibers, expressed in terms of volume of the final hardened concrete is generally less than 3%, for example from 0.5 to 2.5%, preferably approximately 2%. The quantity of organic fibers, expressed on the same basis, is generally from 1 to 8%, preferably from 2 to 5%. The metal fibers are generally chosen from the group including steel fibers, such as high strength steel fibers, amorphous steel fibers or stainless steel fibers. The steel fibers may optionally be coated with a non-ferrous metal such as copper, zinc, nickel (or alloys thereof).

The individual length (1) of the metal fibers is generally at least 2 mm and is preferably 10 to 30 mm. The ratio 1/d (d being the diameter of the fibers) is generally from 10 to 300, preferably from 30 to 300, preferably from 30 to 100.

The organic fibers comprise polyvinyl alcohol (PVA) fibers, polyacrylonitrile (PAN) fibers, fibers of polyethylene (PE), high-density polyethylene (HDPE) fibers, polypropylene (PP) fibers, fibers of homo- or copolymers, polyamide or polyimide fibers. Mixtures of these fibers may be used. The organic reinforcing fibers used in the invention may be classified as follows: high modulus reactive fibers, low modulus nonreactive fibers and low modulus reactive fibers. The presence of organic fibers makes it possible to modify the behavior of the concrete in relation to heat or fire.

The individual length of the organic fibers is preferably from 5 to 40 mm, preferably from 6 to 12 mm. The organic fibers are preferably PVA fibers.

Preferably, the step of placing the construction material comprises extruding the construction material in a pasty form through a nozzle of the deposition head. The conveying step of the inventive method comprises conveying the construction material in a flowable state to the deposition head. In particular, the conveying of the construction material is performed by pumping. Preferably, the material is conveyed in a wet state and is ready to be placed without the need of adding any additional components.

Preferably, the fresh construction material, such as fresh concrete or fresh mortar, is stored in a silo or any other storage container or in a mixer of a ready-mix delivery truck and is conveyed from the storage site directly to the deposition head.

Preferably, the flowable construction material has a yield strength of 0.2-6 kPa when being placed.

In order to improve the conveyability or pumpability described above, a water reducer, in particular a plasticizer or a super-plasticizer, preferably a plasticizer based on polyoxypolycarboxylate or phosphonates, is preferably added to or is present in the construction material before the conveying step. Preferably, the flowable construction material contains both, a phosphonate-based superplasticizer and a polycarboxylate-based superplasticizer. Alternatively, a formaldehyde-based superplasticizer may be used.

A water reducer makes it possible to reduce the amount of mixing water for a given workability by typically 10-15%. By way of example of water reducers, mention may be made of lignosulphonates, hydroxycarboxylic acids, carbohydrates, and other specific organic compounds, for example glycerol, polyvinyl alcohol, sodium alumino-methyl-siliconate and sulfanilic acid as described in the Concrete Admixtures Handbook, Properties Science and Technology, V.S. Ramachandran, Noyes Publications, 1984. Superplasticisers belong to a new class of water reducers and are capable of reducing water contents of mixing water, for a given workability, by approximately 30% by mass. By way of example of a superplasticizer, the PCP super-plasticisers may be noted. The term "PCP" or "polyoxy polycarboxylate" is to be understood according to the present invention as a copolymer of acrylic acids or methacrylic acids and their esters of polyoxyethylene (POE).

Preferably, the construction material comprises 0.4-1 wt.-%, more preferably 0.45-0.75 wt.-%, of one or more water reducer(s), plasticizer(s) or superplasticizer(s), based on the total weight of the hydraulic cement. If more than one type of water reducer, plasticizer or superplasticizer is used, the amount of 0.4-1 wt.-%, preferably 0.45-0.75 wt.-%, refers to the total amount of all such constituents based on the total weight of the hydraulic cement.

Preferably, a defoaming agent may be added to the construction material. For example, a powder defoamer based on fatty alcohol alkoxylates and polysiloxanes on an inorganic carrier material may be used.

According to a second aspect, the invention refers to the use of an aluminum chloride, a hydroxide thereof or a mixture of the foregoing as yielding agent for increasing the yield stress of a flowable construction material comprising a hydraulic cement and aggregates for building structural and architectural components layer-by-layer, such as for 3D concrete or mortar printing.

According to another aspect, the invention provides a flowable construction material for building structural and architectural components layer-by-layer, such as for 3D concrete or mortar printing, comprising a hydraulic cement having a tricalcium aluminate (C3A) content of < 5 wt.-%, preferably of < 3 wt.-%, aggregates, water and a yielding agent selected from aluminum chloride, a hydroxide thereof and a mixture of the foregoing.

The content of tricalcium aluminate (C3A) in the cement can be determined according to standard methods known in the art. In particular, the C3A content may be calculated from the chemical composition of the cement using the Bogue equations, wherein the content of the main oxides (CaO, SiO₂, Al₂O₃, and Fe₂O₃) is determined by X-ray fluorescence spectroscopy (XRF) according to EN 196-2. Alternatively, the C3A content may be determined directly by quantitative X-ray diffraction analysis (QXRD) of the cement, preferably using the Rietveld method. The C3A may be present in different crystallographic forms, particularly in cubic and orthorhombic modifications, both of which are taken into account when determining the total C3A content according to the invention.

Preferably, the yielding agent is present in an amount of 0.05-1.5 % by weight based on the hydraulic cement.

Preferably, the yielding agent is selected from the group consisting of aluminum chloride, aluminum hydroxychloride, aluminum polyhydroxychlorosulfate, and mixtures thereof.

Preferably, the hydraulic cement comprises Portland cement in an amount of < 80 % by weight, preferably in an amount of < 70 % by weight, more preferably in an amount of < 65 % by weight, based on the total amount of the hydraulic cement.

Preferably, the flowable construction material further comprises limestone, wherein the weight ratio of Portland cement to limestone is 10:1-2:1, preferably 5:1-3:1.

Preferably, the flowable construction material comprises 700-950 kg Portland cement, 300-550 kg limestone, 1100-1400 kg sand and 200-300 kg water, per m³ of the flowable construction material.

The invention will now be explained with reference to the following examples.

In the examples, the following cements were used.

| Cement | CEM I 52.5 N (blanc) | CEM I 52.5N (grey) | CEM I 52.5N (Lagerdorf) |
|---|---|---|---|
| C3S (%) | 65,5 | 65,5 | 58, 8 |
| C2S (%) | 21,4 | 20,2 | 15,7 |
| C3A cubic (%) | 2,1 | 1,2 | 5,7 |
| C3A_orthorhombic (%) | <0.5 | <0.5 | 0, 5 |
| C4AF (%) | <0.5 | 6, 9 | 6, 7 |

All three CEM I compositions are Portland cements as defined above.

The following yielding agents were used.
- Floquat ASL: 40% aluminum sulfate (reference agent)
- AluPAC (supplied by Alumichem): poly aluminium chloride, a solution in which the active substance is a polymerized aluminum complex of the gross formula Al(OH)_{1,2}Cl_{1,8}.
- AluACH (supplied by Alumichem): Aluminium chlorohydrate.

Properties of AluPAC:
- Appearance: Clear liquid, pale yellow color
- Aluminum (Al): 9.0 ± 0.5 wt%
- Al₂O₃: 17.0 ± 0.9 wt%
- Chloride (Cl): 22.0 ± 1.0 wt%
- Basicity: 40 ± 2%
- Density (20°C): 1.37 ± 0.02 kg/L
- pH: 0 ± 1
- Viscosity (20°C): 55 ± 5 mPas
- Freezing point: -18°C
- Zinc (Zn): < 1 mg/kg
- Other heavy metals: < 0.5 mg/kg

Properties of AluACH:
- Appearance: Clear liquid
- Aluminum (Al): 12.1 ± 0.3 wt%
- Al₂O₃: 22.9 ± 0.5 wt%
- Chloride (Cl): 8.2 ± 0.3 wt%
- Al:Cl ratio: 2:1 ± 5%
- Basicity: 80 ± 3%
- Density (20°C): 1.34 ± 0.03 kg/L
- Turbidity: < 50 NTU
- pH (30% w/w in water): 4.0 ± 0.5
- Viscosity (20°C): 25 ± 5 mPas
- Freezing Point: -5°C
- Iron (Fe): < 50 mg/kg
- Other heavy metals: < 0.5 mg/kg

Further ingredients:
- Filler: Durcal 1, supplied by Omya; a limestone
- Defoamer: Vinapor ^{®} DF 2922 F, supplied by BASF; a powder defoamer based on a silicone-free blend of surface-active and mineral substance
- Plasticizer: OPTIMA 100, supplied by CHRYSO a superplasticizer based on modified phosphonate
- Sand: Sibelco BE 01

### Experimental procedure

In a first step, the dry components comprising cement, filler, limestone, sand, and anti-foaming agent are combined in a mixer conforming to NF EN 196-1 of April 2006. The dry components are mixed at a first mixing speed of 140 revolutions per minute for a duration of one minute.

Separately, a plasticizer is combined with water to form an aqueous plasticizer solution.

The combined dry components are then subjected to a multistage mixing protocol: (a) the aqueous plasticizer solution is added to the dry components over a period of 30 seconds while maintaining the first mixing speed; (b) mixing is continued at the first mixing speed for a duration of 2 minutes; and (c) the mixing speed is increased to a second mixing speed of 285 revolutions per minute and maintained for a duration of 3 minutes.

Following the mixing protocol, the flowability of the construction material is determined by measuring the spread according to ASTM C230. The spread value is preferably between 150 millimeters and 220 millimeters.

In a second step, after determining the spread value, the yielding agent is added to the construction material. The addition of the yielding agent is performed between 8 and 12 minutes after initiating the mixing protocol. The yielding agent is introduced into the construction material while mixing at the first mixing speed for a duration of 30 seconds.

The yield stress development of the construction material is monitored using a vane shear testing device equipped with a 33-millimeter diameter vane. Measurements are taken at intervals of 30 seconds, 2.5 minutes, 5.5 minutes, 15.5 minutes, and 30.5 minutes after addition of the yielding agent. The measurements are performed by inserting the vane into the construction material and determining the maximum torque required to initiate flow of the material.

### Example 1

Cement mortar compositions listed in Table 1 using a white Portland cement CEM I 52.5 N (blanc) with 1.2wt% C3A were prepared.

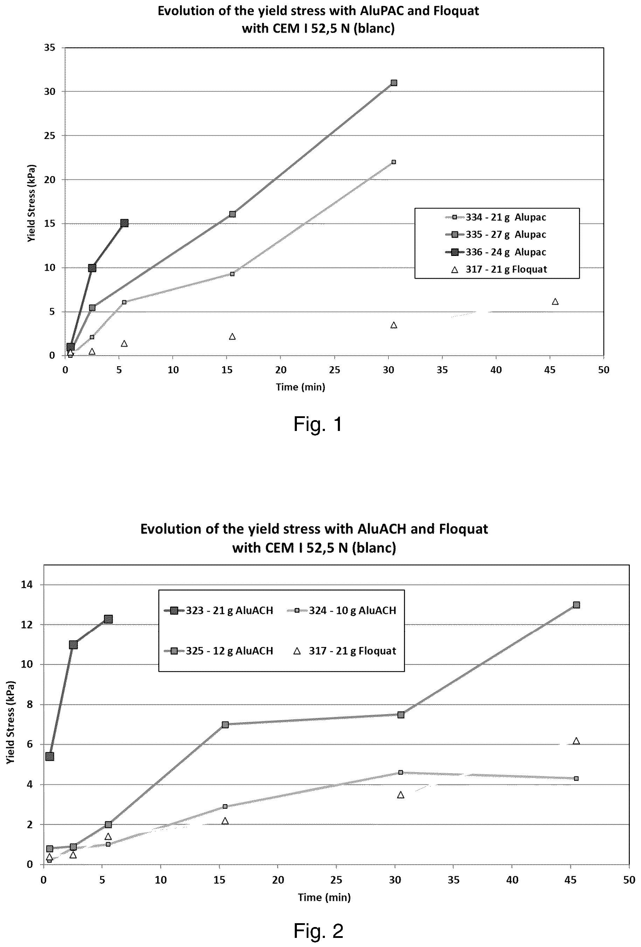

The yield stress results of formulations nos. 317 (reference) and 334, 335 and 336 are shown in Fig. 1. The yield stress results of formulations nos. 317 (reference) and 323, 324 and 325 are shown in Fig. 2.

**Table 1**

| **N° Formula** | **Cement (9)** | **Filler (9)** | **Defoamer (9)** | **Sand (9)** | **Added water (g)** | **Plasticizer (g)** | **Yielding agent 1 (g)** | **Yielding agent 2 (g)** | **Initial slump flow 5 min (mm)** | **Yield stress (kPa) over time (minutes)** | | | | | |
|---|---|---|---|---|---|---|---|---|---|---|---|---|---|---|---|
| | | | | | | | | | | **0.5** | **2.5** | **5.5** | **15.5** | **30.5** | **45.5** |
| 317 | 864.0 | 452 | 5.83 | 1235.5 | 255.5 | 15.20 | Floquat 21.00 | | 156 | 0.4 | 0.5 | 1.4 | 2.2 | 3.5 | 6.2 |
| 323 | 864.0 | 452 | 5.83 | 1235.5 | 255.5 | 15.20 | AluACH 21.00 | | 155 | 5.4 | 11 | 12.3 | | | |
| 324 | 864.0 | 452 | 5.83 | 1235.5 | 255.5 | 15.20 | AluACH 10.06 | | 157 | 0.2 | 0.6 | 1 | 2.9 | 4.6 | 4.3 |
| 325 | 864.0 | 452 | 5.83 | 1235.5 | 255.5 | 15.20 | AluACH 12.00 | | 155 | 0.8 | 0.9 | 2 | 7 | 7.5 | 13 |
| 334 | 864.0 | 452 | 5.83 | 1235.5 | 255.5 | 15.20 | Alupac 21 | | 145 | 0 | 2.1 | 6.1 | 9.3 | 22 | |
| 335 | 864.0 | 452 | 5.83 | 1235.5 | 255.5 | 15.20 | Alupac 27 | | 145 | 1 | 10 | | | | |
| 336 | 864.0 | 452 | 5.83 | 1235.5 | 255.5 | 15.20 | Alupac 24 | | 142 | 0.4 | 5.5 | | 16.1 | 31.0 | |
| 337 | 864.0 | 452 | 5.83 | 1235.5 | 255.5 | 15.20 | AluACH 10.00 | Alupac 10 | 150 | 4.8 | | | | | |
| 338 | 864.0 | 452 | 5.83 | 1235.5 | 255.5 | 15.20 | AluACH 5.00 | Alupac 10 | 148 | 0.6 | 1.2 | 2.5 | 4.9 | 6.6 | 14.0 |
| 340 | 864.0 | 452 | 5.83 | 1235.5 | 255.5 | 15.20 | AluACH 5.00 | Alupac 7.7 | 152 | 0.9 | 1.2 | 4.0 | 6.8 | 9.7 | 13.3 |

The experimental results demonstrate the effectiveness of the yielding agents according to the invention when compared to a conventional aluminum sulfate-based yielding agent (Floquat). When using the conventional aluminum sulfate-based yielding agent at a dosage of 21.00 grams, the yield stress develops gradually from 0.4 kPa to 6.2 kPa over a period of 45.5 minutes, indicating insufficient structuring behavior for efficient 3D printing applications.

In contrast, aluminum hydroxychloride (AluACH) according to the invention shows significantly enhanced structuring behavior. At a dosage of 21.00 grams, the structuring occurs too rapidly to be measured effectively, indicating the high potency of the compound. When reducing the dosage to 10.06 grams, a controlled structuring profile is achieved, reaching 4.3 kPa at 45.5 minutes. A slightly increased dosage of 12.00 grams provides enhanced structuring, reaching 13 kPa at 45.5 minutes. These results indicate that aluminum hydroxychloride achieves superior structuring at approximately half the dosage required for conventional aluminum sulfate-based agents.

Similarly, aluminum chloride (AluPAC) according to the invention demonstrates highly efficient structuring behavior. At a dosage of 21 grams, very high but still measurable structuring is achieved. However, increased dosages of 24 and 27 grams result in structuring that occurs too rapidly to be measured effectively. These results indicate that the optimal dosage for aluminum chloride lies below 21 grams.

Particularly advantageous results are achieved when combining aluminum hydroxychloride and aluminum chloride. A combination of 5 grams aluminum hydroxychloride with 10 grams aluminum chloride provides excellent structuring behavior, reaching 14 kPa at 45.5 minutes. Similarly, reducing the aluminum hydroxychloride content to 3 grams while increasing the aluminum chloride by 5 grams results in comparable performance, reaching 12.2 kPa at 45.5 minutes. These results demonstrate that controlled structuring can be achieved with total yielding agent quantities of 15-18 grams when using combinations according to the invention, representing a significant reduction compared to conventional systems.

### Example 2

Cement mortar compositions listed in Table 2 using a grey Portland cement CEM I 52.5N (grey) with 2.1 wt% C3A were prepared.

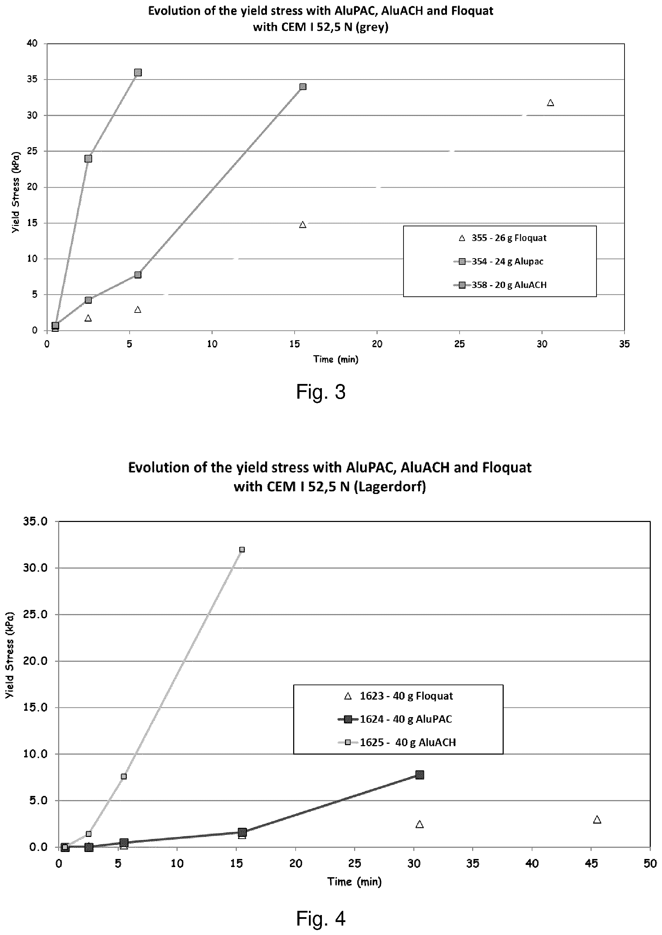

The yield stress results of formulations nos. 355 (reference) and 354 and 358 are shown in Fig. 3.

**Table 2**

| **N° Formula** | **Cement (9)** | **Filler (9)** | **Defoamer (9)** | **Sand (9)** | **Added water (g)** | **Plasticizer (g)** | **Yielding agent 1 (g)** | **Initial slump flow 5 min (mm)** | **Yield** stress (kPa) **over time (minutes)** | | | | |
|---|---|---|---|---|---|---|---|---|---|---|---|---|---|
| | | | | | | | | | **0.5** | **2.5** | **5.5** | **15.5** | **30.5** |
| 354 | 878.0 | 439.0 | 2.57 | 1255.5 | 260 | 13.90 | Alupac 24.00 | 176 | 0.7 | 2.4 | 36 | | |
| 355 | 878.0 | 439.0 | 2.57 | 1255.5 | 260 | 13.90 | Floquat 26.00 | 183 | 0.4 | 1.8 | 3 | 14.8 | 31.8 |
| 358 | 878.0 | 439.0 | 2.57 | 1255.5 | 260 | 13.90 | AluACH 20.00 | 172 | 0.8 | 4.3 | 7.8 | > 34 | |

The experimental results demonstrate the efficacy of the yielding agents according to the invention in a cement system containing 2.1% tricalcium aluminate (C3A), representing a cement with low C3A content as defined in the invention.

A conventional aluminum sulfate-based yielding agent (Floquat), when used at a dosage of 26.00 grams, shows relatively slow structuring development. The yield stress increases from 0.4 kPa at 0.5 minutes to 31.6 kPa at 30.5 minutes, providing a baseline for comparison with the yielding agents according to the invention.

Aluminum chloride (AluPAC) according to the invention, employed at a slightly lower dosage of 24.00 grams, demonstrates significantly accelerated structuring behavior. The yield stress values for the formula 354 are 24 kPa at 2.5 minutes and 36 kPa at 5.5 minutes.

Aluminum hydroxychloride (AluACH) according to the invention, utilized at a dosage of 20.00 grams, also exhibits superior structuring behavior compared to the conventional aluminum sulfate-based agent. The yield stress develops from 0.8 kPa at 0.5 minutes to 7.8 kPa at 5.5 minutes, ultimately exceeding 34 kPa at 15.5 minutes. Notably, this enhanced performance is achieved with a lower dosage than both the conventional aluminum sulfate-based agent and the aluminum chloride.

These results demonstrate that in cement systems with low C3A content (2.1%), both aluminum chloride and aluminum hydroxychloride according to the invention provide significantly faster structuring development compared to conventional aluminum sulfate-based agents.

### Example 3 (Reference example)

Cement mortar compositions listed in Table 3 using a grey Portland cement CEM I 52.5N Lagerdorf with 6.2 wt% C3A were prepared.

The yield stress results of formulations nos. 1623 and 1624 are shown in Fig. 4.

**Table 3**

| **N° Formula** | **Cement (9)** | **Filler (9)** | **Defoamer (9)** | **Sand (9)** | **Added water (g)** | **Plasticizer (g)** | **Yielding agent 1 (g)** | **Initial slump flow 5 min (mm)** | **Yield** stress (kPa) **over time (minutes)** | | | | | |
|---|---|---|---|---|---|---|---|---|---|---|---|---|---|---|
| | | | | | | | | | **0.5** | **2.5** | **5.5** | **15.5** | **30.5** | **45.5** |
| 1623 | 864 | 432.0 | 2.5 | 1184.0 | 258.5 | 23.32 | Floquat 40.00 | 167 | 0.0 | 0.1 | 0.2 | 1.3 | 2.5 | 3.0 |
| 1624 | 864 | 432.0 | 2.5 | 1184.0 | 258.5 | 23.32 | Alupac 40.00 | 172 | 0.0 | 0.0 | 0.5 | 1.6 | 7.8 | |
| 1625 | 864 | 432.0 | 2.5 | 1184.0 | 258.5 | 23.32 | AluACH 40.00 | 168 | 0.0 | 1.4 | 7.6 | 32 | | |

This example demonstrates that the advantageous effects of the invention are specific to cements having low C3A content. The example was carried out using a cement having a C3A content of 6.2%, which is outside the scope of the invention.

When using a conventional aluminum sulfate-based yielding agent (Floquat) at a dosage of 40.00 grams, the yield stress develops very slowly from 0.0 kPa to merely 3.0 kPa over a period of 45.5 minutes. Similarly, aluminum chloride (AluPAC) according to the invention, when used at the same dosage of 40.00 grams, shows only moderately increased structuring behavior, reaching 7.8 kPa at 30.5 minutes.

Aluminum hydroxychloride (AluACH), while showing somewhat faster structuring development reaching 32 kPa at 15.5 minutes, does not demonstrate the same pronounced advantages over conventional aluminum sulfate-based agents as observed in cements with low C3A content. This is evidenced by the need for substantially higher dosages (40.00 grams) compared to the dosages required for effective structuring in low C3A cements (typically 10-20 grams).

## Claims

1. A method of placing a flowable construction material comprising a hydraulic cement and aggregates for building structural and architectural components layer-by-layer, such as for 3D concrete or mortar printing, said method comprising:
conveying the flowable construction material to a deposition head, placing the construction material through an outlet of the deposition head while moving the deposition head, in order to form a layer of construction material,
before placing the construction material, adding a yielding agent to the construction material so that the placed material has an increased yield stress when compared to the material during the conveying step,
wherein successive layers of construction material are placed on top of each other,
wherein the hydraulic cement has a content of tricalcium aluminate (C3A) of < 5 wt.-%, preferably < 3 wt.-%,
wherein aluminum chloride, a hydroxide thereof or a mixture of the foregoing is used as said yielding agent.

2. The method according to claim 1, wherein the yielding agent is present in an amount of 0.5-3.5 % by weight, preferably 1.0 to 3.0 % by weight, based on the hydraulic cement.

3. The method according to claim 1 or 2, wherein the yielding agent is selected from the group consisting of aluminum chloride, aluminum hydroxychloride, aluminum polyhydroxychlorosulfate, and mixtures thereof.

4. The method according to claim 1, 2 or 3, wherein the hydraulic cement comprises Portland clinker in an amount of > 65 % by weight, preferably in an amount of > 80 % by weight, more preferably in an amount of > 90 % by weight, based on the total amount of the hydraulic cement.

5. The method according to any one of claims 1 to 4, wherein the flowable construction material further comprises limestone, wherein the weight ratio of Portland cement to limestone is 10:1-3:1, preferably 5:1-3:1.

6. The method according to any one of claims 1 to 5, wherein the flowable construction material comprises 600-900 kg Portland cement, 200-500 kg limestone, 900-1300 kg sand and 150-300 kg water, per m³ of the flowable construction material.

7. The method according to any one of claims 1 to 6, wherein the flowable construction material further comprises a superplasticizer.

8. The method according to any one of claims 1 to 7, wherein the flowable construction material has a yield strength of 0.2-6 kPa when being placed.

9. Use of an aluminum chloride, a hydroxide thereof or a mixture of the foregoing as yielding agent for increasing the yield stress of a flowable construction material comprising a hydraulic cement and aggregates for building structural and architectural components layer-by-layer, such as for 3D concrete or mortar printing.

10. A flowable construction material for building structural and architectural components layer-by-layer, such as for 3D concrete or mortar printing, comprising a hydraulic cement having a tricalcium aluminate (C3A) content of < 5 wt.-%, preferably of < 3 wt.-%, aggregates, water and a yielding agent selected from aluminum chloride, a hydroxide thereof and a mixture of the foregoing.

11. The construction material according to claim 10, wherein the yielding agent is present in an amount of 0.05-1.5 % by weight based on the hydraulic cement.

12. The construction material according to claim 10 or 11, wherein the yielding agent is selected from the group consisting of aluminum chloride, aluminum hydroxychloride, aluminum polyhydroxychlorosulfate, and mixtures thereof.

13. The construction material according to claim 10, 11 or 12, wherein the hydraulic cement comprises Portland cement in an amount of < 80 % by weight, preferably in an amount of < 70 % by weight, more preferably in an amount of < 65 % by weight, based on the total amount of the hydraulic cement.

14. The construction material according to any one of claims 10 to 13, wherein the flowable construction material further comprises limestone, wherein the weight ratio of Portland cement to limestone is 3:1-1.5:1.

15. The construction material according to any one of claims 10 to 14, wherein the flowable construction material comprises 700-950 kg Portland cement, 300-550 kg limestone, 1100-1400 kg sand and 200-300 kg water, per m³ of the flowable construction material.
